# EUROPÄISCHE PATENTSCHRIFT

(11) **EP 0 717 698 B1**
(45) Veröffentlichungstag und Bekanntmachung des Hinweises auf die Patenterteilung: **12.03.1997**
(21) Anmeldenummer: 94926914.6
(22) Anmeldetag: 01.09.1994
(51) Int. Cl.: B64F 5/00, G05B 19/408

(54) **VERFAHREN ZUR BEARBEITUNG EINES OBJEKTS MITTELS EINES MINDESTENS EINE BEARBEITUNGSEINHEIT AUFWEISENDEN BEARBEITUNGSGERÄTS**
METHOD OF TREATING AN OBJECT BY MEANS OF EQUIPEMENT HAVING AT LEAST ONE TREATMENT UNIT
PROCEDE DE TRAITEMENT D'UN OBJET A L'AIDE D'UN APPAREIL DE TRAITEMENT COMPORTANT AU MOINS UNE UNITE DE TRAITEMENT

(30) Priorität: 11.09.1993 DE 4330845
(43) Veröffentlichungstag der Anmeldung: 26.06.1996
(73) Patentinhaber: PUTZMEISTER-WERK MASCHINENFABRIK GMBH, 72631 Aichtal (DE)
(72) Erfinder: WANNER, Martin-Christoph, D-70599 Stuttgart (DE); HERKOMMER, Thomas, Fred, D-70839 Gerlingen (DE)
(74) Vertreter: Wolf, Eckhard, Dr.-Ing.
(86) Internationale Anmeldenummer: EP9402898
(87) Internationale Veröffentlichungsnummer: WO9507217

(56) Entgegenhaltungen:
- EP-A- 0 361 663
- US-A- 3 835 498
- US-A- 4 380 696
- US-A- 4 639 878
- DORNIER POST, 30. Juni 1993 Seiten 29 - 30 EIBERT 'GROSSES ANWENDUNGSGEBIET FUR ENTFERNUNGSBILDKAMERA' in der Anmeldung erwähnt

## Beschreibung

Die Erfindung betrifft ein Verfahren zur Bearbeitung eines Objekts, insbesondere eines Flugzeugs, mittels eines mindestens eine Bearbeitungseinheit aufweisenden Bearbeitungsgeräts, bei dem das Bearbeitungsgerät vor dem zu bearbeitenden Objekt positioniert wird, bei dem zur Steuerung der mindestens einen Bearbeitungseinheit oder eines die mindestens eine Bearbeitungseinheit mit dem zu bearbeitenden Objekt in Wirkkontakt bringenden Auslegers des Bearbeitungsgeräts die Relativposition des Bearbeitungsgeräts zu diesem Objekt bestimmt wird, indem mit einem Abstandssensor des Bearbeitungsgeräts zumindest ein Teilbereich der dem Abstandssensor zugewandten Oberfläche des zu bearbeitenden Objekts abgetastet, ein aus dieser Abtastung gewonnenes Abtastmuster mit einem gespeicherten Referenzmodell des zu bearbeitenden Objekts verglichen und daraus die Entfernung und die Orientierung des Bearbeitungsgeräts relativ zu dem zu bearbeitenden Objekt ermittelt wird.

Ein derartiges Verfahren ist aus dem Artikel "Großes Anwendungsgebiet für Erkennungsbildkamera", Dornier-Post 2/93 bekannt, in dem ein Verfahren für das Waschen von Flugzeugen mittels eines Großraumroboters beschrieben wird. Nachteilig an dem bekannten Verfahren ist, daß das bei der Ermittlung der Relativposition zwischen dem Großraumroboter und dem Flugzeug eingesetzte digitale Flugzeugmodell nur die herstellerseitige Definition der Geometrie und der Abmessungen des zu bearbeitenden Flugzeugs berücksichtigt. Ein derartiges Referenzmodell ermöglicht nur in Ausnahmefällen eine zufriedenstellende Reinigung des Flugzeugs, da selbst bei Flugzeugtypen einer bestimmten Baureihe im Einzelfall erhebliche geometrische Abweichungen zwischen den bei der Erstellung des Referenzmodells vorgegebenen standardabmessungen und den tatsächlich auftretenden Abmessungen gegeben sind, die entweder durch Herstellungstoleranzen oder durch eine leicht unterschiedliche Ausrüstung der Flugzeuge, insbesondere hinsichtlich ihrer Triebwerke, Sensorik oder Antennen, auftreten. Des weiteren berücksichtigt das bei dem bekannten Verfahren eingesetzte Referenzmodell nicht Luftlinienspezifische Abweichungen zwischen den einzelnen Flugzeugtypen einer Baureihe. Andererseits stellt das bei dem bekannten Verfahren verwendete Referenzmodell lediglich ein statisches Modell dar, welches es nicht erlaubt, selbst bei einem bestimmten Flugzeug aufgrund unterschiedlicher Beladungszustände oder Umwelteinflüsse, insbesondere Temperatureinflüsse, auftretenden Deformationstoleranzen zu berücksichtigen.

Es ist daher Aufgabe der Erfindung, ein Verfahren der eingangs genannten Art derart zu bilden, daß die oben beschriebenen Nachteile zumindest vermindert oder vorzugsweise vollständig eliminiert werden.

Diese Aufgabe wird erfindungsgemäß dadurch gelöst, daß in einem dem Vergleich des vom Abstandssensor generierten Abtastmusters mit dem gespeicherten Referenzmodell des zu bearbeitenden Objekts vorangehenden Verfahrensschritt das zu bearbeitende Objekt mit einem zumindest abstandsauflösenden Sensor abgetastet wird, daß das von diesem Sensor generierte Muster des zu bearbeitenden Objekts mit seinem gespeicherten Referenzmodell verglichen und die Abweichungen zwischen dem abgetasteten Muster und dem gespeicherten Referenzmodell festgestellt werden, und daß das gespeicherte Referenzmodell des zu bearbeitenden Objekts zumindest teilweise entsprechend den festgestellten Abweichungen modifiziert und das derart generierte modifizierte Referenzmodell zur Bestimmung der Relativposition des Bearbeitungsgeräts verwendet wird.

Durch die erfindungsgemäßen Maßnahmen wird in besonders vorteilhafter Art und Weise erreicht, daß annähernd beliebige Abweichungen des zu bearbeitenden Objekts von dem zur Erstellung des Grund-Referenzmodells herangezogenen Vorgaben erfaßt und das Grund-Referenzmodell in geeigneter Art und Weise, z.B. auch nur entsprechend den für den Bearbeitungsvorgang relevanten Unterschieden modifiziert werden kann. Eine derartige Vorgangsweise führt daher in vorteilhafter Art und Weise zu einem deutlich verbesserten Verfahrensablauf, da nicht nur die Positionierung des Bearbeitungsgeräts exakter durchgeführt werden kann. Vielmehr erlaubt es beim erfindungsgemäßen Verfahren das verbesserte Referenzmodell des zu bearbeitenden Objekts in vorteilhafter Art und Weise, daß bei einer Festlegung der die mindestens eine Bearbeitungseinheit und/oder deren Ausleger steuernden Ablaufsteuerung die von der mindestens einen Bearbeitungseinheit und/oder dem Ausleger durchzuführenden räumlichen Bewegungen durch eine entsprechende Simulation derselben exakter und einfacher festgelegt werden können.

Eine vorteilhafte Weiterbildung der Erfindung sieht vor, daß in das modifizierte Referenzmodell nicht nur ein entsprechend korrigiertes und dadurch verbessertes Modell des zu bearbeitenden Objekts eingeht, sondern daß in besonders vorteilhafter Art und Weise auch der das zu bearbeitende Objekt umgebende Bereich in die Erstellung des modifizierten Referenzmodells einbezogen wird.

Weitere vorteilhafte Weiterbildungen der Erfindung ergeben sich aus den Unteransprüchen.

Weitere Einzelheiten sind dem Ausführungsbeispiel zu entnehmen, das im nachfolgenden beschrieben wird.

Das erfindungsgemäße Verfahren wird im folgenden anhand einer nur exemplarischen Charakter besitzenden und die Allgemeinheit der nachstehend aufgeführten Überlegungen nicht beschränkenden Ausführungsform der Reinigung eines Flugzeugs mittels eines Großraumroboters beschrieben. Dieser vor dem Flugzeug zu positionierende Großraumroboter weist eine an sich bekannte Ablaufsteuerung zur Ansteuerung eines Bürstenkopfes und eines den Bürstenkopf tragenden, vielachsigen Auslegers auf, derart, daß der Bürstenkopf in einer vordefinierten Art und Weise über die Außenhaut des Flugzeugs geführt werden kann, um dieses zu reinigen, insbesondere zu waschen. Zur Bestimmung der Relativposition des Großraumroboters bezüglich des Flugzeugs wird eine einen Abstandssensor darstellende Entfernungssbildkamera verwendet, welche rasterartig kurze Laserimpulse in Richtung auf das Flugzeug sendet, die von der Außenhaut des Flugzeugs reflektiert werden. Die reflektierten Laserimpulse werden von der Erkennungsbildkamera registriert, und über eine Laserimpuls-Laufzeitmessung wird die Enfernung zu den entsprechenden Abtastpunkten auf der Außenhaut des Flugzeugs vermittelt. Es entsteht somit eine Matrix digitaler Entfernungswerte, die für eine direkte Weiterverarbeitung in einer entsprechenden Steuer-/Auswerteeinheit besonders geeignet sind. Eine derartige Entfernungsbildkamera ist in der DE 39 42 770 C2 beschrieben, auf die zur Erläuterung des genaueren Aufbaus Bezug genommen wird. Es ist aber auch möglich, andere Abstandssensoren, wie z.B. ein von der Fa. LEICA hergestelltes Laser-Tracking-System, zu verwenden. Das derart erzeugte Abtastmuster des Objekts wird mit einem in der Steuer-/Auswerteeinheit des Großraumroboters gespeicherten Referenzmodell des Flugzeugs verglichen und aus diesem Vergleich wird die Entfernung und die Orientierung der Erkennungsbildkamera und somit des in einer definierten räumlichen Relation zur Erkennungsbildkamera stehenden Großraumroboters relativ zum Flugzeug ermittelt.

Bei der Erstellung des Referenzmodells wird zuerst ein den Standardaufbau des Flugzeugs repräsentierendes Grund-Referenzmodell erstellt, indem die vom Hersteller des Flugzeugs oder von sonstigen Stellen zur Verfügung gestellten Daten in ein entsprechendes Flächenmodell umgesetzt werden, wobei vorzugsweise eine Datenreduktion und Nachbearbeitung der in digitale Daten umgesetzten Rohdaten erfolgt. Diese Nachbearbeitung der Rohdaten dient insbesondere dazu, das Grund-Referenzmodell für den speziell durchzuführenden Bearbeitungsvorgang zu präparieren, indem entweder für diesen speziellen Bearbeitungsvorgang nicht erforderliche Datenpunkte aus der generierten Datenmenge eliminiert oder weitere Datenpunkte des Flächenmodells aus den zur Verfügung stehenden Rohdaten generiert und in dieses Modell implementiert werden.

Zur Berücksichtigung von flugzeugtypenspezifischen oder luftlinienspezifischen Abweichungen des aktuell zu behandelnden Flugzeugs von den bei der Erstellung des Grund-Referenzmodells zugrundegelegten Vorgaben, wie sie z.B. durch unterschiedliche Fahrwerke, Fairings und Landeklappen, und Rumpfflügel-Übergänge oder Triebwerke, Antennen und Sensorik-Bauteile auftreten, ist nun in vorteilhafter Art und Weise vorgesehen, daß das zu reinigende Flugzeug mittels eines abstandsauflösenden Sensors, vorzugsweise mittels der Erkennungsbildkamera, zumindest in den für den Bearbeitungsvorgang relevanten Bereichen abgetastet wird. An diesen Abtastvorgang anschließend werden die zwischen dem durch diese Abtastung gewonnenen Muster und dem Grund-Referenzmuster auftretenden Unterschiede festgestellt, und zwar zumindest soweit, als sie für das Waschen des Flugzeugs, also für den am Objekt vorzunehmenden Bearbeitungsvorgang, relevant sind. Diese durch die Erkennungsbildkamera infolge der Abtastung des Flugzeugs gewonnenen Informationen werden nun - gegebenenfalls nach einer entsprechenden Datenumwandlung - in das Flächenmodell des Grund-Referenzmodells implementiert und das derart entstandene modifizierte Referenzmodell wird in einen Speicher der Steuer-/Auswerteeinheit eingegeben und zur Bestimmung der Relativposition des Großraumroboters herangezogen.

Die beschriebene Vorgangsweise zur Erstellung des Referenzmodells zeichnet sich durch ihren einfachen und wenig aufwendigen Ablauf aus, so daß eine Adaption oder Modifikation des den standardmäßigen Grundaufbau eines Flugzeuges repräsentierenden Grund-Referenzmodells auf individuelle Fertigungstoleranzen und/oder luftlinienspezifische Ausstattungsdetails besonders leicht möglich ist. Die beschriebene Erfassung des Ist-Zustands des zu reinigenden Flugzeuges mittels der Erkennungsbildkamera erlaubt auch die Erfassung von Abweichungen gegenüber dem Standardaufbau oder dem wie zuvor beschriebenen ermittelten modifizierten Referenzmodell, welche durch unterschiedliche Beladungszustände des Flugzeugs oder Umwelteinflüsse, insbesondere Temperatureinflüsse verursacht sind. In diesem Fall wird die Erfassung des Abtastmusters des Flugzeugs mittels der Erkennungsbildkamera bei unterschiedlichen Beladungszuständen oder Umwelteinflüssen jeweils separat gemessen und eine entsprechende Anzahl von modifizierten Referenzmustern erstellt und entsprechend abgespeichert.

Die beschriebene Erfassung des zur Positionsbestimmung verwendeten Referenzmodells des Flugzeugs erlaubt in vorteilhafter Art und Weise nicht nur eine drastische Verbesserung der Modelldarstellung des zu bearbeitenden Objekts selbst, sondern auch in besonders einfacher Art und Weise die Einbeziehung, also die Modellierung, luftlinienspezifischer Randbedingungen in das Referenzmodell. So ist es z.B. möglich, ausgehend von dem oben beschriebenen Referenzmodell, zusätzlich zu dem Flugzeug noch in dessen Umgebung befindliche Sekundärobjekte, also z.B. die das Flugzeug beim Reinigungsprozeß aufnehmende Halle, etwaige Hallenbelegungspläne oder sonstige derartige im Umfeld auftretende Randbedingungen zu berücksichtigen. Hierzu wird die Entfernung des Flugzeugs von den zu berücksichtigenden Sekundärobjekten oder - als eine Alternative hierzu - die Entfernung dieser Objekte von dem an einem definierten Referenzpunkt relativ zum Flugzeug aufgestellten Abstandssensor wie oben beschrieben bestimmt und in die Referenzmodellbildung miteinbezogen. Durch eine derartige Vorgangsweise ist es nicht nur möglich, die Positionierung des Bearbeitungsgeräts vor dem Flugzeug auch bei komplexen Umgebungsverhältnissen besonders einfach durchzuführen. Vielmehr erlaubt es die Einbeziehung der Flugzeugumgebung in das Referenzmodell auch, die zur Steuerung des Auslegers und/oder zu mindestens einer Bearbeitungseinheit verwendete Ablaufsteuerung derart off-line zu simulieren, daß diese Ablaufsteuerung bereits off-line derart festgelegt werden kann, daß Kollisionen des Auslegers oder der mindestens einen Bearbeitungseinheit mit dem Flugzeug selbst oder mit erfaßten und in die Referenzmodellbildung miteinbezogenen, im Umgebungsbereich des Flugzeugs befindlichen Objekten vermieden werden können.

## Patentansprüche

1. Verfahren zur Bearbeitung eines Objekts, insbesondere eines Flugzeugs, mittels eines mindestens eine Bearbeitungseinheit aufweisenden Bearbeitungsgeräts,
bei dem das Bearbeitungsgerät vor dem zu bearbeitenden Objekt positioniert wird,
bei dem zur Steuerung der mindestens einen Bearbeitungseinheit oder eines die mindestens eine Bearbeitungseinheit mit dem zu bearbeitenden Objekt in Wirkkontakt bringenden Auslegers des Bearbeitungsgeräts die Relativposition des Bearbeitungsgeräts zu diesem Objekt bestimmt wird,
indem mit einem Abstandssensor zumindest ein Teilbereich der diesem Abstandssensor zugewandten Oberfläche des zu bearbeitenden Objekts abgetastet, ein aus dieser Abtastung gewonnenes Abtastmuster mit einem gespeicherten Referenzmodell des zu bearbeitenden Objekts verglichen und daraus die Entfernung und die Orientierung des Bearbeitungsgeräts relativ zu dem zu bearbeitenden Objekt ermittelt wird,
**dadurch gekennzeichnet,**
daß in einem dem Vergleich des vom Abstandssensor generierten Abtastmusters mit dem gespeicherten Referenzmodell des zu bearbeitenden Objekts vorangehenden Verfahrensschritt das zu bearbeitende Objekt mit einem zumindest abstandsauflösenden Sensor abgetastet wird,
daß das von diesem Sensor generierte Muster des zu bearbeitenden Objekts mit seinem Referenzmodell verglichen und die Abweichungen zwischen dem abgetasteten Muster und dem gespeicherten Referenzmodell festgestellt werden,
und daß das gespeicherte Referenzmodell des Objekts zumindest teilweise entsprechend den festgestellten Abweichungen modifiziert und das derart generierte modifizierte Referenzmodell zur Bestimmung der Relativposition des Bearbeitungsgeräts verwendet wird.

2. Verfahren nach Anspruch 1, dadurch gekennzeichnet, daß bei der Erzeugung des modifizierten Referenzmodells nur diejenigen Abweichungen zwischen dem ursprünglich gespeicherten Referenzmodell und dem vom zumindest abstandsauflösenden Sensor erzeugten Muster berücksichtigt werden, welche für den vom Bearbeitungsgerät durchzuführenden Bearbeitungsvorgang relevant sind.

3. Verfahren nach Anspruch 1 oder 2, dadurch gekennzeichnet, daß als zumindest abstandsauflösender Sensor eine Erkennungsbildkamera verwendet wird.

4. Verfahren nach einem der Ansprüche 1 bis 3, dadurch gekennzeichnet, daß zur Erzeugung des ursprünglichen Referenzmodells ein in Form von geeigneten Rohdaten vorliegender Standardaufbau des zu bearbeitenden Objekts verwendet wird.

5. Verfahren nach einem der Ansprüche 1 bis 4, dadurch gekennzeichnet, daß zumindest ein Teil des das zu bearbeitende Objekt umgebenden Bereichs bei der Erzeugung des modifizierten Referenzmodells berücksichtigt wird.

## Claims

1. A method for treating of an object, in particular an airplane, by means of equipment having at least one treatment unit, in which the equipment is positioned in front of the object to be treated, in which for controlling the at least one treatment unit or an arm of the equipment, which arm brings the at least one treatment unit into active contact with the object to be treated, the relative position of the equipment with respect to the object is determined by scanning with a range sensor at least one partial area of the surface of the object to be treated, which surface faces said range sensor, by comparing a scan pattern obtained from this scanning with a stored reference model of the object to be treated, and by determining from this the distance and the orientation of the equipment relative to the object to be treated, characterized in that in one method step preceding the comparison of the scan pattern generated by the range sensor with the stored reference model of the object to be treated, the object to be treated is scanned with a sensor, which at least resolves the distance, the pattern of the object to be treated, which pattern is generated by this sensor, is compared with its reference model and the differences between the scanned pattern and the stored reference model are determined, and that the stored reference model of the object to be treated is modified at least partially corresponding with the determined differences, and the so generated modified reference model is used for determining the relative position of the equipment.

2. The method according to Claim 1, characterized in that during the creating of the modified reference model only those differences between the originally stored reference model and the pattern created by the at least distance-resolving sensor are considered, which differences are relevant for the treatment operation to be carried out by the equipment.

3. The method according to Claim 1 or 2, characterized in that a recognition camera is used as an at least distance-resolving sensor.

4. The method according to one of the Claims 1 to 3, characterized in that for creating the original reference model a standard design of the object to be treated, which design is present in the form of suitable raw data, is used.

5. The method according to one of the Claims 1 to 4, characterized in that at least a part of the area surrounding the object to be treated is considered during the creation of the modified reference model.

## Revendications

1. Procédé de traitement d'un objet, notamment d'un avion, à l'aide d'un appareil de traitement comportant au moins une unité de traitement, dans lequel l'appareil de traitement est positionné devant l'objet à traiter, dans lequel la position relative de l'appareil de traitement par rapport audit objet est déterminée pour la commande d'au moins une unité de traitement ou d'un cantilever de l'appareil de traitement qui amène l'objet à traiter en contact actif avec au moins une unité de traitement, en explorant avec un capteur de distance au moins une zone partielle de la surface de l'objet à traiter tournée vers le capteur de distance, en comparant un modèle de balayage obtenu à partir de cette exploration avec un modèle de référence mémorisé de l'objet à traiter et en déterminant à partir de cette information la distance et l'orientation de l'appareil de traitement par rapport à l'objet à traiter, **caractérisé en** ce que, au cours d'une opération de base précédant la comparaison du modèle de balayage généré par le capteur de distance avec le modèle de référence mémorisé de l'objet à traiter, l'objet à traiter est exploré à l'aide d'un détecteur permettant au moins la résolution de la distance, en ce que le modèle de l'objet à traiter généré par ledit détecteur est comparé avec son modèle de référence mémorisé, avec détermination des écarts entre le modèle exploré et le modèle de référence mémorisé, en ce que le modèle de référence mémorisé de l'objet à traiter est modifié au moins en partie en fonction des écarts déterminés, et en ce que le modèle de référence modifié ainsi généré est utilisé pour la détermination de la position relative de l'appareil de traitement.

2. Procédé selon la revendication 1, caractérisé en ce que lors de l'établissement du modèle de référence modifié, seuls sont pris en compte les écarts entre le modèle de référence initialement mémorisé et le modèle généré par le détecteur permettant au moins une résolution de la distance, qui sont significatifs pour l'opération de traitement à effectuer par l'appareil de traitement.

3. Procédé selon la revendication 1 ou 2, caractérisé en ce que le détecteur permettant au moins la résolution de la distance, est une caméra d'identification par imagerie.

4. Procédé selon l'une des revendications 1 à 3, caractérisé en ce qu'il utilise pour la génération du modèle de référence initiale une structure standard de l'objet à traiter disponible sous la forme de données brutes appropriées.

5. Procédé selon l'une des revendications 1 à 4, caractérisé en ce qu'au moins une partie de la zone environnant l'objet à traiter est prise en considération pour l'établissement du modèle de référence modifié.
